# EUROPEAN PATENT SPECIFICATION

(11) **EP 2 338 238 B1**
(45) Date of publication and mention of the grant of the patent: **16.03.2016**
(21) Application number: 09791912.0
(22) Date of filing: 25.08.2009
(51) Int. Cl.: H04B 5/00

(54) **CONCURRENT WIRELESS POWER TRANSMISSION AND NEAR-FIELD COMMUNICATION**
GLEICHZEITIGE DRAHTLOSE STROMÜBERTRAGUNG UND NACHFELDKOMMUNIKATION
TRANSMISSION DE PUISSANCE SANS FIL SIMULTANÉE ET COMMUNICATION DE CHAMP PROCHE

(30) Priority: 26.08.2008 US 92022 P; 25.08.2009 US 547200
(43) Date of publication of application: 29.06.2011
(73) Proprietor: QUALCOMM Incorporated, San Diego, CA 92121 (US)
(72) Inventor: COOK, Nigel P., San Diego California 92121 (US); SIEBER, Lukas, San Diego California 92121 (US); WIDMER, Hanspeter, San Diego California 92121 (US)
(74) Representative: Schmidbauer, Andreas Konrad
(86) International application number: PCT/US2009/054962
(87) International publication number: WO 2010/025157

(56) References cited:
- WO-A-2008/101151
- DE-A1- 19 642 568
- US-A1- 2005 063 488
- US-A1- 2005 077 356

## Description

### BACKGROUND

### Field

The present invention relates generally to wireless charging, and more specifically to devices, systems, and methods related to wireless charging systems.

### Background

Typically, each powered device such as a wireless electronic device requires its own wired charger and power source, which is usually an alternating current (AC) power outlet. Such a wired configuration becomes unwieldy when many devices need charging. Approaches are being developed that use over-the-air or wireless power transmission between a transmitter and a receiver coupled to the electronic device to be charged. The receive antenna collects the radiated power and rectifies it into usable power for powering the device or charging the battery of the device. Wireless powering of devices may utilize transmission frequencies that may be occupied by other communication systems. One such example, is a Near-Field Communication (NFC) system (commonly known as a type of "RFID") which may utilize, for example, the 13.56 MHz band.

Furthermore, there may be separate applications resident in as single electronic device that utilize a common frequency band. Accordingly, there is a need to allow compatible interoperation of various applications over a common frequency band.

Attention is drawn to WO2008/101151 A which describes a rf signal transfer link which uses amplitude shift keying (ASK) to transfer rf data pulses. The link minimizes state transition time at the end of each data pulse.

Attention is further drawn to US 2005/077356 A1 which relates to a communication system and communication method which enable various types of near field communication, and a data processing apparatus. NFC communication apparatuses 1 to 3 have two features in that each can perform communication in two communication modes and that each can perform data transmission at a plurality of transfer rates. The two communication modes consist of a passive mode and an active mode. In the passive mode, between the NFC communication apparatuses 1 and 2, for example, the NFC communication apparatus 1 transmits data to the NFC communication apparatus 2 by modulating electromagnetic waves generated by itself, while the NFC communication apparatus 2 transmits data to the NFC communication apparatus 1 by performing load modulation on the electromagnetic waves generated by the NFC communication apparatus 1. Alternatively, in the active mode, either of the NFC communication apparatuses 1 and 2 transmits data by modulating electromagnetic waves generated by itself.

Attention is also drawn to US 2005/063488 A1 which describes a system providing an inductive power and data link between an external transmitter and miniature internal receiver. The system is suited to applications where the receiver must be of a small size and the system must consume very little power, such as an implanted biomedical device. The system is also compatible with systems where bi-directional communications are required. The novel transmitter and receiver form an improved forward data telemetry system. The transmitter consists of a Class-E converter with its optimum operating frequency being synchronously, instantaneously and efficiently altered in accordance with the data to be transmitted, thereby producing an FSK modulated magnetic field of substantially constant amplitude. The constant amplitude output allows for the continuous, data-independent transfer of power to the miniature receiver and its associated electronics. The present invention also represents an improvement over the high efficiency Class-E converters previously patented by the inventors. The receiver consists of a coil and an integrated rectifying system to recover operating power from the incident magnetic field, as well as an FSK demodulator whose operation is based on the multiphase comparison of charging times of integrated capacitors. The described FSK demodulator approach removes deleterious effects resulting from low-frequency changes in the transmitter frequency, and eliminates time distortion artifacts generated by circuit imbalances and asymmetries in the power recovery process. The combination of the transmitter and receiver improvements yields a reliable data transfer system unaffected by circuit imbalances and incidental variations in the amplitude and frequency of the magnetic field.

### SUMMARY OF THE INVENTION

In accordance with the present invention an electronic device, and a method, as set forth in the independent claims, respectively, are provided. Preferred embodiments of the invention are described in the dependent claims.

### BRIEF DESCRIPTION OF THE DRAWINGS

FIG. 1 illustrates a simplified block diagram of a wireless power transmission system.
FIG. 2 illustrates a simplified schematic diagram of a wireless power transmission system.
FIG. 3 illustrates a schematic diagram of a loop antenna, in accordance with exemplary embodiments.
FIG. 4 illustrates a functional block diagram of a wireless power transmission system, in accordance with an exemplary embodiment.
FIG. 5 illustrates a transmitter arrangement for coexistence of wireless power transmission and NFC, in accordance with an exemplary embodiment.
FIG. 6 illustrates another transmitter arrangement for coexistence of wireless power transmission and NFC, in accordance with another exemplary embodiment.
FIG. 7 illustrates an electronic device including coexistent wireless power charging and NFC, in accordance with an exemplary embodiment.
FIG. 8 illustrates a flowchart of a method for receiving wireless power and NFC, in accordance with an exemplary embodiment.

### DETAILED DESCRIPTION

The word "exemplary" is used herein to mean "serving as an example, instance, or illustration." Any embodiment described herein as "exemplary" is not necessarily to be construed as preferred or advantageous over other embodiments.

The detailed description set forth below in connection with the appended drawings is intended as a description of exemplary embodiments of the present invention and is not intended to represent the only embodiments in which the present invention can be practiced. The term "exemplary" used throughout this description means "serving as an example, instance, or illustration," and should not necessarily be construed as preferred or advantageous over other exemplary embodiments. The detailed description includes specific details for the purpose of providing a thorough understanding of the exemplary embodiments of the invention. It will be apparent to those skilled in the art that the exemplary embodiments of the invention may be practiced without these specific details. In some instances, well-known structures and devices are shown in block diagram form in order to avoid obscuring the novelty of the exemplary embodiments presented herein.

The term "wireless power" is used herein to mean any form of energy associated with electric fields, magnetic fields, electromagnetic fields, or otherwise that is transmitted from a transmitter to a receiver without the use of physical electromagnetic conductors. Power conversion in a system is described herein to wirelessly charge devices including, for example, mobile phones, cordless phones, iPod, MP3 players, headsets, etc.. Generally, one underlying principle of wireless energy transfer includes magnetic coupled resonance *(i.e.,* resonant induction) using frequencies, for example, below 30 MHz. However, various frequencies may be employed including frequencies where license-exempt operation at relatively high radiation levels is permitted, for example, at either below 135 kHz (LF) or at 13.56 MHz (HF). At these frequencies normally used by Radio Frequency Identification (RFID) systems, systems must comply with interference and safety standards such as EN 300330 in Europe or FCC Part 15 norm in the United States. By way of illustration and not limitation, the abbreviations LF and HF are used herein where "LF" refers to *f₀*=135 kHz and "HF" to refers to *f₀*=13.56 MHz.

The term "NFC" may also include the functionality of RFID and the terms "NFC" and "RFID" may be interchanged where compatible functionality allows for such substitution. The use of one term or the other is not to be considered limiting.

The term "transceiver" may also include the functionality of a transponder and the terms "transceiver" and "transponder" may be interchanged where compatible functionality allows for such substitution. The use of one term over or the other is not to be considered limiting.

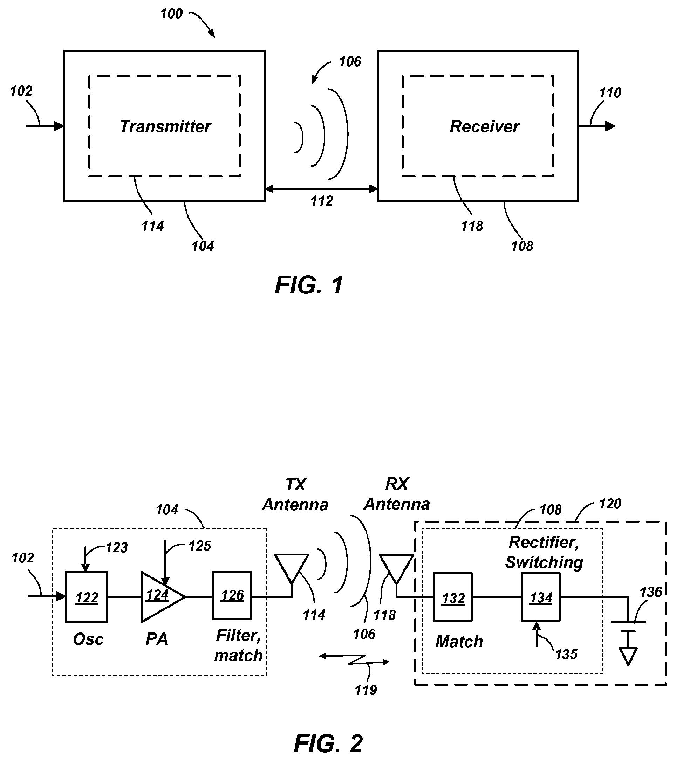

FIG. 1 illustrates wireless power transmission system 100, in accordance with various exemplary embodiments. Input power 102 is provided to a transmitter 104 for generating a magnetic field 106 for providing energy transfer. A receiver 108 couples to the magnetic field 106 and generates an output power 110 for storing or consumption by a device (not shown) coupled to the output power 110. Both the transmitter 104 and the receiver 108 are separated by a distance 112. In one exemplary embodiment, transmitter 104 and receiver 108 are configured according to a mutual resonant relationship and when the resonant frequency of receiver 108 and the resonant frequency of transmitter 104 are matched, transmission losses between the transmitter 104 and the receiver 108 are minimal when the receiver 108 is located in the "near-field" of the magnetic field 106.

Transmitter 104 further includes a transmit antenna 114 for providing a means for energy transmission and receiver 108 further includes a receive antenna 118 for providing a means for energy reception or coupling. The transmit and receive antennas are sized according to applications and devices to be associated therewith. As stated, an efficient energy transfer occurs by coupling a large portion of the energy in the near-field of the transmitting antenna to a receiving antenna rather than propagating most of the energy in an electromagnetic wave to the far-field. In this near-field, a coupling may be established between the transmit antenna 114 and the receive antenna 118. The area around the antennas 114 and 118 where this near-field coupling may occur is referred to herein as a coupling-mode region.

FIG. 2 shows a simplified schematic diagram of a wireless power transmission system. The transmitter 104, driven by input power 102, includes an oscillator 122, a power amplifier or power stage 124 and a filter and matching circuit 126. The oscillator is configured to generate a desired frequency, which may be adjusted in response to adjustment signal 123. The oscillator signal may be amplified by the power amplifier 124 with a power output responsive to control signal 125. The filter and matching circuit 126 may be included to filter out harmonics or other unwanted frequencies and match the impedance of the transmitter 104 to the transmit antenna 114.

An electronic device 120 includes the receiver 108 may include a matching circuit 132 and a rectifier and switching circuit 134 to generate a DC power output to charge a battery 136 as shown in FIG. 2 or power a device coupled to the receiver (not shown). The matching circuit 132 may be included to match the impedance of the receiver 108 to the receive antenna 118.

A communication channel 119 may also exist between the transmitter 104 and the receiver 108. As described herein, the communication channel 119 may be of the form of Near-Field Communication (NFC). In one exemplary embodiment described herein, communication channel 119 is implemented as a separate channel from magnetic field 106 and in another exemplary embodiment, communication channel 119 is combined with magnetic field 106.

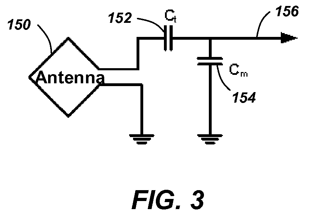

As illustrated in FIG. 3, antennas used in exemplary embodiments may be configured as a "loop" antenna 150, which may also be referred to herein as a "magnetic," "resonant" or a "magnetic resonant" antenna. Loop antennas may be configured to include an air core or a physical core such as a ferrite core. Furthermore, an air core loop antenna allows the placement of other components within the core area. In addition, an air core loop may more readily enable placement of the receive antenna 118 (FIG. 2) within a plane of the transmit antenna 114 (FIG. 2) where the coupled-mode region of the transmit antenna 114 (FIG. 2) may be more effective.

As stated, efficient transfer of energy between the transmitter 104 and receiver 108 occurs during matched or nearly matched resonance between the transmitter 104 and the receiver 108. However, even when resonance between the transmitter 104 and receiver 108 are not matched, energy may be transferred at a lower efficiency. Transfer of energy occurs by coupling energy from the near-field of the transmitting antenna to the receiving antenna residing in the neighborhood where this near-field is established rather than propagating the energy from the transmitting antenna into free space.

The resonant frequency of the loop antennas is based on the inductance and capacitance. Inductance in a loop antenna is generally the inductance created by the loop, whereas, capacitance is generally added to the loop antenna's inductance to create a resonant structure at a desired resonant frequency. As a non-limiting example, capacitor 152 and capacitor 154 may be added to the antenna to create a resonant circuit that generates a sinusoidal or quasi-sinusoidal signal 156. Accordingly, for larger diameter loop antennas, the size of capacitance needed to induce resonance decreases as the diameter or inductance of the loop increases. Furthermore, as the diameter of the loop antenna increases, the efficient energy transfer area of the near-field increases for "vicinity" coupled devices. Of course, other resonant circuits are possible. As another non-limiting example, a capacitor may be placed in parallel between the two terminals of the loop antenna. In addition, those of ordinary skill in the art will recognize that for transmit antennas the resonant signal 156 may be an input to the loop antenna 150.

Exemplary embodiments of the invention include coupling power between two antennas that are in the near-fields of each other. As stated, the near-field is an area around the antenna in which electromagnetic fields exist but may not propagate or radiate away from the antenna. They are typically confined to a volume that is near the physical volume of the antenna. In the exemplary embodiments of the invention, antennas such as single and multi-turn loop antennas are used for both transmit (Tx) and receive (Rx) antenna systems since most of the environment possibly surrounding the antennas is dielectric and thus has less influence on a magnetic field compared to an electric field. Furthermore, antennas dominantly configured as "electric" antennas (e.g., dipoles and monopoles) or a combination of magnetic and electric antennas is also contemplated.

The Tx antenna can be operated at a frequency that is low enough and with an antenna size that is large enough to achieve good coupling efficiency (*e.g*.,> 10%) to a small Rx antenna at significantly larger distances than allowed by far-field and inductive approaches mentioned earlier. If the Tx antenna is sized correctly, high coupling efficiencies (*e.g.,* 30%) can be achieved when the Rx antenna on a host device is placed within a coupling-mode region (*i.e.,* in the near-field or a strongly coupled regime) of the driven Tx loop antenna

The various exemplary embodiments disclosed herein identify different coupling variants which are based on different power conversion approaches, and the transmission range including device positioning flexibility (*e.g.*, close "proximity" coupling for charging pad solutions at virtually zero distance or "vicinity" coupling for short range wireless power solutions). Close proximity coupling applications (*i.e.,* strongly coupled regime, coupling factor typically *k* > 0.1) provide energy transfer over short or very short distances typically in the order of millimeters or centimeters depending on the size of the antennas. Vicinity coupling applications (*i.e.,* loosely coupled regime, coupling factor typically *k* < 0.1) provide energy transfer at relatively low efficiency over distances typically in the range from 10 cm to 2 m depending on the size of the antennas.

As described herein, "proximity" coupling and "vicinity" coupling may require different matching approaches to adapt the power source/sink to the antenna/coupling network. Moreover, the various exemplary embodiments provide system parameters, design targets, implementation variants, and specifications for both LF and HF applications and for the transmitter and receiver. Some of these parameters and specifications may vary, as required for example, to better match with a specific power conversion approach. System design parameters may include various priorities and tradeoffs. Specifically, transmitter and receiver subsystem considerations may include high transmission efficiency, low complexity of circuitry resulting in a low-cost implementation.

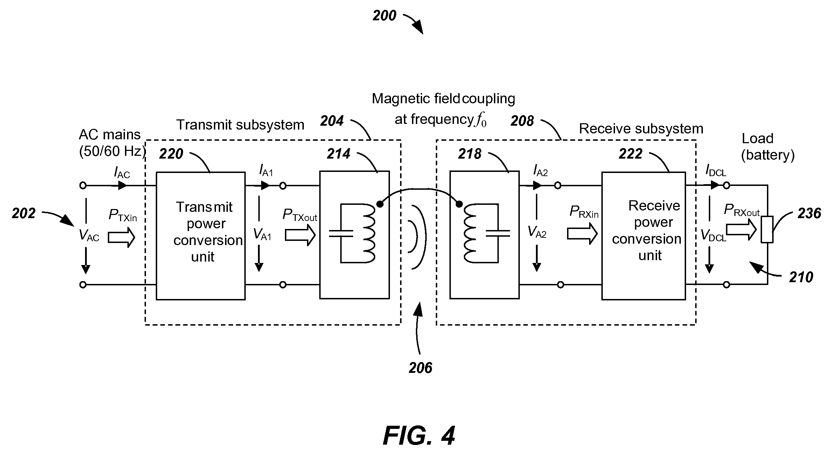

FIG. 4 illustrates a functional block diagram of a wireless power transmission system configured for direct field coupling between a transmitter and a receiver, in accordance with an exemplary embodiment. Wireless power transmission system 200 includes a transmitter 204 and a receiver 208. Input power P_{TXin} is provided to transmitter 204 for generating a predominantly non-radiative field with direct field coupling *k* 206 for providing energy transfer. Receiver 208 directly couples to the non-radiative field 206 and generates an output power P_{RXout} for storing or consumption by a battery or load 236 coupled to the output port 210. Both the transmitter 204 and the receiver 208 are separated by a distance. In one exemplary embodiment, transmitter 204 and receiver 208 are configured according to a mutual resonant relationship and when the resonant frequency, *f₀*, of receiver 208 and the resonant frequency of transmitter 204 are matched, transmission losses between the transmitter 204 and the receiver 208 are minimal while the receiver 208 is located in the "near-field" of the radiated field generated by transmitter 204.

Transmitter 204 further includes a transmit antenna 214 for providing a means for energy transmission and receiver 208 further includes a receive antenna 218 for providing a means for energy reception. Transmitter 204 further includes a transmit power conversion unit 220 at least partially function as an AC-to-AC converter. Receiver 208 further includes a receive power conversion unit 222 at least partially functioning as an AC-to-DC converter.

Various receive antenna configurations are described herein which use capacitively loaded wire loops or multi-turn coils forming a resonant structure that is capable to efficiently couple energy from transmit antenna 214 to the receive antenna 218 via the magnetic field if both the transmit antenna 214 and receive antenna 218 are tuned to a common resonance frequency. Accordingly, highly efficient wireless charging of electronic devices (e.g. mobile phones) in a strongly coupled regime is described where transmit antenna 214 and receive antenna 218 are in close proximity resulting in coupling factors typically above 30%. Accordingly, various receiver concepts comprised of a wire loop/coil antenna and a well matched passive diode rectifier circuit are described herein.

Many Li-Ion battery-powered electronic devices (e.g. mobile phones) operate from 3.7 V and are charged at currents up to 1 A (e.g. mobile phones). At maximum charging current, the battery may therefore present a load resistance to the receiver on the order of 4 Ohms. This generally renders matching to a strongly coupled resonant induction system quite difficult since higher load resistances are typically required to achieve maximum efficiency in these conditions.

An optimum load resistance is a function of the secondary's L-C ratio (ratio of antenna inductance to capacitance). It can be shown however that there generally exist limits in the choice of the L-C ratio depending on frequency, desired antenna form-factor and Q-factor. Thus, it may not always be possible to design a resonant receive antenna that is well matched to the load resistance as presented by the device's battery.

Active or passive transformation networks, such as receive power conversion unit 222, may be used for load impedance conditioning, however, active transformation networks may either consume power or add losses and complexity to the wireless power receiver and therefore are considered inadequate solutions. In various exemplary embodiments described herein, receive power conversion unit 222 includes diode rectifier circuits that exhibit input impedance at a fundamental frequency that is larger than the load impedance R_{L} of load 236. Such rectifier circuits, in combination with a low L-C resonant receive antenna 218, may provide a desirable (i.e., near optimum) solution.

Generally, at higher operating frequencies, for example above 1 MHz and particularly at 13.56 MHz, loss effects resulting from diode recovery time (i.e., diode capacitance) become noticeable. Therefore, circuits, including diodes exhibiting diode voltage waveforms with low *dv*/*dt*, are desirable. By way of example, these circuits typically require a shunt capacitor at the input which may function as an anti-reactor needed to compensate antenna inductance thus maximizing transfer efficiency.

The fact that required shunt capacitance maximizing transfer efficiency is a function of both coupling factor and battery load resistance and would required automatic adaptation (retuning) if one of these parameters was changed. Assuming a strongly coupled regime with changes of coupling factor within a limited range and maximum efficiency only at highest power, a reasonable compromise may however be found not requiring automatic tuning.

Another design factor for wireless power transmission based on magnetic induction principles is that harmonics are generated by a rectifier circuit. Harmonic content in the receive antenna current and thus in the magnetic field surrounding the receive antenna may exceed tolerable levels. Therefore, receiver/rectifier circuits desirable produce minimum distortion on the induced receive antenna currents.

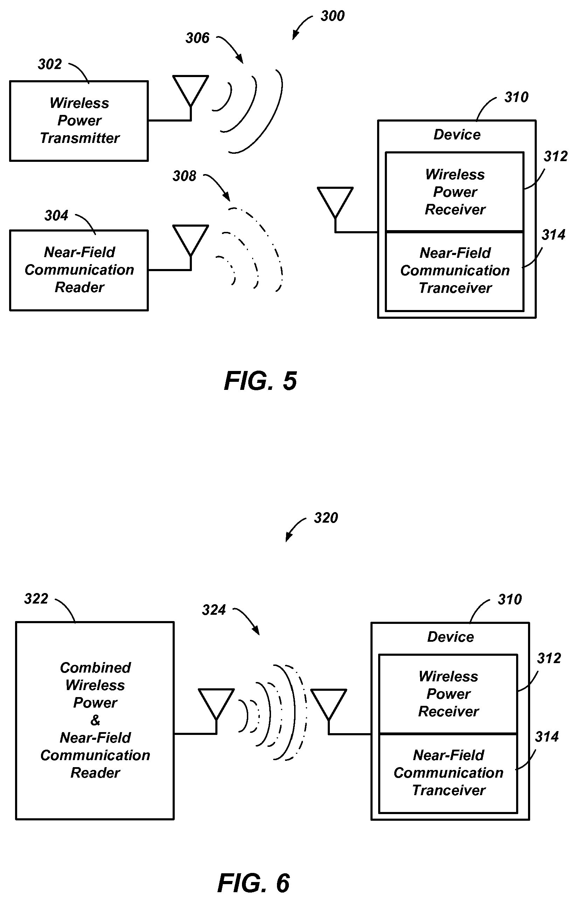

FIGS. 5-8 illustrate various configurations of supporting RFID (e.g., NFC) in the presence of wireless power transmission, in accordance with various exemplary embodiments. Various transmitter arrangements are described for interacting with a receiver including both wireless power charging capabilities and NFC functionality.

Generally, RFID systems, including NFC, operated in Europe have to comply to ECC standard and to the corresponding standard in the United States. These standards define dedicated frequency bands and emission (field strength) levels. These frequencies bands that mostly coincide with ISM-bands are also interesting for wireless powering and charging of portable electronic devices as they generally permit license exempt use at increased emission levels.

NFC readers (e.g., RFID readers) supporting passive transceivers (e.g., transponders) must transmit a signal sufficiently strong to energize the transceiver (e.g., transponder) sometimes in unfavorable conditions. By way of example, a 13.56 MHz RFID/NFC transmitter typically emits an Amplitude Shift Keying (ASK) modulated carrier using power, for example, in the range from 1 W to 10 W. The degree of modulation is typically very low. In the frequency domain, the ASK-modulated NFC signal appears as a strong discrete carrier wave component and a much weaker lower and upper side-band containing the transmitted information. The carrier wave component of a 13.56 MHz transmitter must be within a narrow frequency band defined by 13.5600 MHz +/- 7 kHz.

Principally, the high power carrier component of a NFC-radiated field is not distinguishable from that of a wireless power transmission system operating at the same frequency. Therefore, wireless power transmission systems may coexist with NFC without producing harmful interference. In contrast, if not coherent (i.e., absolutely frequency synchronous), the combination of an NFC system with a wireless power transmission system merely increases the received energy on the average. Such a result is similar to a wireless power transmission system that transmits information at a low baud rate, for example, for charging management purposes.

FIG. 5 illustrates a transmitter arrangement for coexistence of wireless power transmission and NFC, in accordance with an exemplary embodiment. The arrangement 300 of FIG. 5 illustrates a wireless power transmitter 302 which independently operates separate from a NFC transmitter or reader 304. In the various exemplary embodiments, it is assumed that both wireless power transmitter 302 and NFC transmitter 304 each operate in substantially the same transmit frequency band. Wireless power transmitter 302 generates an unmodulated magnetic near-field 306 at a frequency *fₒ* and NFC transmitter 304 generates a modulated magnetic near-field 308 at the frequency *f₀*.

Wireless power transmitter 302 may be implemented as a charging system separate and independent from an NFC system incorporating NFC transmitter 304. Accordingly, the respective carrier waves transmitted by wireless power transmitter 302 and NFC transmitter 304 are not phase-aligned. However, as stated above, the combined power proves beneficial rather than destructive.

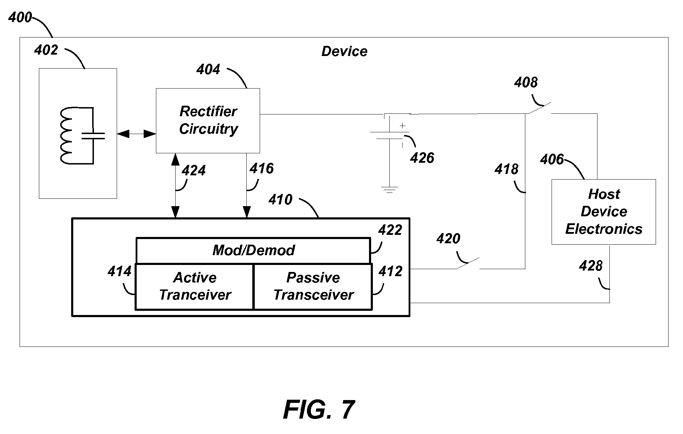

An electronic (e.g., host) device 310 includes dual functionality of receiving wireless power via a wireless power receiver 312 and engaging in NFC via an NFC receiver or transceiver 314. While FIG. 5 illustrates the dual functionality as being separate, FIG. 7 below details various interrelationships of wireless power receiver 312 and NFC transceiver 314.

FIG. 6 illustrates another transmitter arrangement for coexistence of wireless power transmission and NFC, in accordance with another exemplary embodiment. The arrangement 320 of FIG. 6 illustrates a combined wireless power and NFC transmitter or reader 322 which may share electronic components such as a common oscillator. As stated, in the various exemplary embodiments, it is assumed that both wireless power transmission and NFC occur in substantially the same transmit frequency band. Combined wireless power and NFC transmitter 322 generates modulation during NFC on magnetic near-field 324 at a frequency *f₀* and otherwise generates an unmodulated magnetic near-field 324 at the frequency *f₀*.

The wireless power transmitter 302 of FIG. 6 is implemented according to the description with reference to FIG. 5, however, the carrier wave transmitted by the combined wireless power and NFC transmitter 322 is a single carrier wave for both wireless power transfer and for NFC and, therefore, any phase relationship does not exist.

FIG. 7 illustrates an electronic device including coexistent wireless power charging and NFC, in accordance with an exemplary embodiment. An electronic device 400 combines the functionality of wireless power receiver 312 and NFC receiver 314 of FIG. 5 and FIG. 6, implementation of electronic device 400 utilizes common elements for implementing specific functionality. Furthermore, due to coexistent compatibility of wireless power transmission techniques described herein, the functionality of the wireless power receiver and the NFC transceiver (e.g., transponder) may be jointly integrated into electronic device 400.

Electronic device 400 includes an antenna 402 configured to function for both wireless power transmission and for NFC. Furthermore, antenna 402 is configured to resonate when excited by either an unmodulated magnetic near-field 306 (FIG. 5) at a frequency *f₀* or a modulated magnetic near-field 308 (FIG. 5) at the frequency *f₀.* Furthermore, antenna 402 is configured to resonate when excited by either (i) one or more individual carrier waves generating the unmodulated magnetic near-field 306 (FIG. 5) at a frequency *f₀* or a modulated magnetic near-field 308 (FIG. 5) at the frequency *f₀,* or (ii) a single carrier wave, whether modulated or unmodulated, generating the magnetic near-field 324 (FIG. 6). Furthermore, antenna 402 is not switched between wireless power transmission functionality and NFC functionality and instead responds to either modulated or unmodulated magnetic near-fields.

Electronic device 402 further includes a rectifier circuit 404 configured to rectify alternating induced current into a DC voltage for charging a battery (load) 426 or providing wireless power to host device electronics 406. Electronic device 402 may further include a switch 408 for activating host device electronics 406 by coupling stored energy from battery 426 to the host device electronics 406. Alternatively, host device electronics 406 may be directly powered from rectifier circuit 404 in the absence of an energy storage device such as battery 426.

Electronic device 402 further includes a RFID/NFC circuitry 410 which may be configured to include either passive transceiver (e.g., transponder) circuitry 412 or active transceiver (e.g., transponder) circuitry 414, or may be configured to include passive and active transceiver circuitry. Passive transceiver circuitry 412 may receive DC power 416 from rectifier circuit 404. Furthermore, either rectifier circuit 404 or NFC circuitry 410 may need to include power limiting circuitry to protect passive transceiver circuitry 412 from potentially damaging power levels in the presence of wireless power transmission signal levels that could be detrimental.

Active transceiver circuitry 414 exhibits higher power requirements and therefore may receive DC power 418 from a stored energy source such as from battery 426. NFC circuitry 410 may be further configured to detect DC power 418 causing the selection of active transceiver circuitry 414 in NFC circuitry 410 over passive transceiver circuitry 412. Alternatively, switch 420 figuratively illustrates the absence of stored energy (i.e., missing or discharged battery) which causes NFC circuitry 410 to select passive transceiver circuitry 412.

When a modulated magnetic near-field induces excitation in antenna 402, the modulated data needs to be demodulated. Furthermore, when electronic device 400 is engaged in NFC data in the NFC circuitry 410 or received over data path 428 must be modulated and transmitted (e.g., using antenna load impedance modulation) via data path 424 and antenna 402. Accordingly, electronic device 400 further includes demodulation/modulation (demod/mod) circuitry 422 which is illustrated as part of NFC circuitry 410 for use by either passive transceiver circuitry 412 or active transceiver circuitry 414. Demod/mod circuitry 422 is illustrated as a portion of NFC circuitry 410 but may also be inclusive of rectifier circuitry 404. Furthermore, demod/mod circuitry 422 may be included within each of passive transceiver circuitry 412 and active transceiver circuitry.

Resonant magnetic antennas, such as antenna 402, are compactly integrated into an electronic device typically exhibit a lower Q-factor (e.g., < 100). This may be considered advantageous with respect to NFC requiring a trade-off between power efficiency and bandwidth for data modulation.

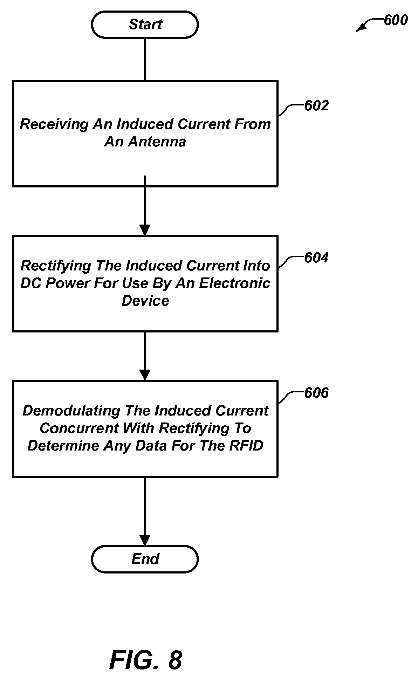

FIG. 8 illustrates a flowchart of a method for concurrent reception of wireless power and NFC, in accordance with an exemplary embodiment. Method 600 for concurrent reception of wireless power and NFC is supported by the various structures and circuits describe herein. Method 600 includes step 602 for receiving an induced current from an antenna. Method 600 further includes step 604 for rectifying the induced current into DC power for use by an electronic device. Method 600 further includes a step 606 for demodulating the induced current concurrent with rectifying to determine any data for the NFC.

Those of skill in the art would understand that control information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, and controlled by computer software, or combinations of both. To clearly illustrate this interchangeability of hardware and software, various illustrative components, blocks, modules, circuits, and steps have been described above generally in terms of their functionality. Whether such functionality is implemented and controlled as hardware or software depends upon the particular application and design constraints imposed on the overall system. Skilled artisans may implement the described functionality in varying ways for each particular application, but such implementation decisions should not be interpreted as causing a departure from the scope of the exemplary embodiments of the invention.

The various illustrative logical blocks, modules, and circuits described in connection with the embodiments disclosed herein may be controlled with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The control steps of a method or algorithm described in connection with the embodiments disclosed herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the control functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

The previous description of the disclosed exemplary embodiments is provided to enable any person skilled in the art to make or use the present invention. Various modifications to these exemplary embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the appended claims.

## Claims

1. An electronic device (400), comprising:
an antenna (402) configured to resonate in an electromagnetic field and generate an induced current during resonance;
rectifier circuitry (404), coupled to the antenna, and configured to rectify the induced current from the antenna during resonance into a direct current (DC) voltage to at least one of charge a load (426) or provide power to the electronic device (400); and
near-field communication (NFC) circuitry (410) coupled to the rectifier circuitry (404) and configured to demodulate data based on the induced current,
the electronic device **characterized by**
the NFC circuitry (410) further comprising active transceiver circuitry (414) and passive transceiver circuitry (412), the NFC circuitry (410) configured to detect DC power (418), the active transceiver circuitry (414) selected over the passive transceiver circuitry (412) if the DC power (418) is detected.

2. The device of claim 1, wherein the rectifier circuitry (404) is configured to provide DC power (416) to the passive transceiver circuitry (412).

3. The device of claim 2, wherein the rectifier circuitry (404) is configured to limit power to the passive transceiver circuitry (412).

4. The device of claim 1, wherein the rectifier circuitry (404) is configured to provide DC power (418) to the active transceiver circuitry (414).

5. The device of claim 4, comprising a switch (420) configured to disable the DC power (418) supplied to the active transceiver circuitry (414).

6. The device of claim 1, wherein the NFC circuitry (410) is configured to demodulate the data based on the induced current and to modulate transmit data in one of the passive transceiver circuitry (412) and active transceiver circuitry (414).

7. The device of claim 1, wherein the antenna (402) is coupled to the rectifier circuitry (404) during rectification of the induced current and to the NFC circuitry (410) during at least one of the demodulation of data based on the induced current and the modulation from transmit data received from one of the passive transceiver circuitry (412) and the active transceiver circuitry (414).

8. A method for concurrent reception of wireless power and near-field communication (NFC), comprising:
receiving an induced current from an antenna (402) of an electronic device (400);
rectifying the induced current to generate direct current (DC) power for use by an electronic device (400);
and **characterized by** further comprising
selecting the active transceiver circuitry (414) over the passive transceiver circuitry (412) if DC power (418) is detected in the battery (426);
selecting the passive transceiver circuitry (412) over the active transceiver circuitry (414) if DC power (418) is not detected in the battery (426); and
demodulating the induced current to determine data for NFC.

9. The method of claim 8, wherein demodulating comprises demodulating data for use by at least one of the active transceiver circuitry (414) of the electronic device (400) and the passive transceiver circuitry (412) of the electronic device (400).

10. The method of claim 9, comprising powering with the generated DC voltage the active transceiver circuitry (414) and the passive transceiver circuitry (412).

11. The method of claim 8, wherein the induced current is generated from at least one of an unmodulated carrier wave and a modulated data carrier wave including modulated data thereon.

12. The method of claim 11, wherein when the induced current is generated from a modulated data carrier wave, the method comprising rectifying the modulated data into DC power.

13. The method of claim 8, further comprising:
providing DC power (416) to the passive transceiver circuitry (412) when the passive transceiver circuitry (412) is selected; and
providing DC power (418) to the active transceiver circuitry (414) when the active transceiver circuitry (414) is selected.

## Patentansprüche

1. Eine Elektronikeinrichtung (400), die Folgendes aufweist:
eine Antenne (402), die konfiguriert ist, um in einem elektromagnetischen Feld mitzuschwingen und einen Induktionsstrom während der Resonanz bzw. des Mitschwingens zu erzeugen;
Gleichrichterschaltkreise (404), die an die Antenne gekoppelt sind und die konfiguriert sind zum Gleichrichten des Induktionsstroms von der Antenne, während der Resonanz, in eine Gleichstromspannung zum Laden einer Last bzw. eines Verbrauchers (426) und/oder zum Vorsehen von Leistung an die elektronische Einrichtung (400); und
Nahfeldkommunikationsschaltkreise bzw. NFC-Schaltkreise (NFC = near-field communication) (410), die an die Gleichrichterkreise (404) gekoppelt sind und konfiguriert sind zum Demodulieren von Daten basierend auf dem Induktionsstrom, wobei die elektronische Einrichtung **dadurch gekennzeichnet ist, dass**
die NFC-Schaltkreise (410) weiter aktive Transceiverschaltkreise (414) und passive Transceiverschaltkreise (412) aufweisen, wobei die NFC-Schaltkreise (410) konfiguriert sind zum Detektieren von Gleichstromleistung (418), wobei die aktiven Transceiverschaltkreise (414) gegenüber den passiven Transceiverschaltkreisen (412) ausgewählt werden, wenn die Gleichstromleistung (418) detektiert wird.

2. Einrichtung nach Anspruch 1, wobei die Gleichrichterschaltkreise (404) konfiguriert sind zum Vorsehen von Gleichstromleistung (416) an die passiven Transceiverschaltkreise (412).

3. Einrichtung nach Anspruch 2, wobei die Gleichrichterschaltkreise (404) konfiguriert sind zum Begrenzen von Leistung an die passiven Transceiverschaltkreise (412).

4. Einrichtung nach Anspruch 1, wobei die Gleichrichterschaltkreise (404) konfiguriert sind zum Vorsehen von Gleichstromleistung (418) an die aktiven Transceiverschaltkreise (414).

5. Einrichtung nach Anspruch 4, die einen Schalter (420) aufweist, der konfiguriert ist zum Deaktivieren der Gleichstromleistung (418), die an die aktiven Transceiverschaltkreise (414) geliefert wird.

6. Einrichtung nach Anspruch 1, wobei die NFC-Schaltkreise (410) konfiguriert sind zum Demodulieren der Daten basierend auf dem Induktionsstrom und zum Modulieren von Sendedaten in den passiven Transceiverschaltkreisen (412) oder den aktiven Transceiverschaltkreisen (414).

7. Einrichtung nach Anspruch 1, wobei die Antenne (402) während der Gleichrichtung des Induktionsstroms an die Gleichrichterschaltkreise (404) und während der Demodulation von Daten basierend auf dem Induktionsstrom und/oder der Modulation von Sendedaten, die von den passiven Transceiverschaltkreisen (412) oder den aktiven Transceiverschaltkreisen (414) empfangen werden, an die NFC-Schaltkreise (410) gekoppelt ist.

8. Ein Verfahren zum gleichzeitigen Empfang von Drahtlosleistung und Nahfeldkommunikation bzw. NFC (NFC = near-field communication), das Folgendes aufweist:
Empfangen eines Induktionsstroms von einer Antenne (402) einer Elektronikeinrichtung (400);
Gleichrichten des Induktionsstroms, um Gleichstromleistung zur Verwendung durch eine Elektronikeinrichtung (400) zu generieren;
und das weiter **gekennzeichnet ist durch**:
Auswählen der aktiven Transceiverschaltkreise (414) gegenüber den passiven Transceiverschaltkreisen (412), wenn Gleichstromleistung (418) in der Batterie bzw. dem Akku (426) detektiert wird;
Auswählen der passiven Transceiverschaltkreise (412) gegenüber den aktiven Transceiverschaltkreisen (414), wenn keine Gleichstromleistung (418) in der Batterie bzw. dem Akku (426) detektiert wird; und
Demodulieren des Induktionsstroms, um Daten zur NFC zu bestimmen.

9. Verfahren nach Anspruch 8, wobei das Demodulieren Demodulieren von Daten zur Verwendung durch die aktiven Transceiverschaltkreise (414) der Elektronikeinrichtung (400) und/oder die passiven Transceiverschaltkreise (412) der Elektronikeinrichtung (400) aufweist.

10. Verfahren nach Anspruch 9, das weiter das Mit-Leistung-Versorgen der aktiven Transceiverschaltkreise (414) und der passiven Transceiverschaltkreise (412) mit der erzeugten Gleichstromspannung aufweist.

11. Verfahren nach Anspruch 8, wobei der Induktionsstrom aus einer unmodulierten Trägerwelle und/oder einer modulierten Datenträgerwelle, die darauf modulierte Daten beinhaltet, generiert wird.

12. Verfahren nach Anspruch 11, wobei der induzierte Strom aus einer modulierten Datenträgerwelle erzeugt wird, wobei das Verfahren Gleichrichten der modulierten Daten in Gleichstromleistung aufweist.

13. Verfahren nach Anspruch 8, das weiter Folgendes aufweist:
Vorsehen von Gleichstromleistung (416) an die passiven Transceiverschaltkreise (412), wenn die passiven Transceiverschaltkreise (412) ausgewählt werden; und
Vorsehen von Gleichstromleistung (418) an die aktiven Transceiverschaltkreise (414), wenn die aktiven Transceiverschaltkreise (414) ausgewählt werden.

## Revendications

1. Dispositif électronique (400) comprenant :
une antenne (402) agencée pour résonner dans un champ électromagnétique et générer un courant induit pendant la résonance ;
une circuiterie de redresseur (404), couplée à l'antenne, et agencée pour redresser le courant induit provenant de l'antenne pendant la résonance pour obtenir une tension de courant continu (DC) pour au moins l'une de la charge d'une charge (426) et de la fourniture d'alimentation au dispositif électronique (400) ; et
une circuiterie de communication en champ proche (NFC) (410) couplée à la circuiterie de redresseur (404) et agencée pour démoduler des données sur la base du courant induit, le dispositif électronique étant **caractérisé en ce que** la circuiterie NFC (410) comprend en outre une circuiterie d'émetteur-récepteur active (414) et une circuiterie d'émetteur-récepteur passive (412), la circuiterie NFC (410) étant agencée pour détecter de l'énergie DC (418), la circuiterie d'émetteur-récepteur active (414) étant sélectionnée au lieu de la circuiterie d'émetteur-récepteur passive (412) si l'énergie DC (418) est détectée.

2. Dispositif selon la revendication 1, dans lequel la circuiterie de redresseur (404) est agencée pour fournir de l'énergie DC (416) à la circuiterie d'émetteur-récepteur passive (412).

3. Dispositif selon la revendication 2, dans lequel la circuiterie de redresseur (404) est agencée pour limiter l'énergie vers la circuiterie d'émetteur-récepteur passive (412).

4. Dispositif selon la revendication 1, dans lequel la circuiterie de redresseur (404) est agencée pour fournir de l'énergie DC (418) à la circuiterie d'émetteur-récepteur active (414).

5. Dispositif selon la revendication 4, comprenant un commutateur (420) agencé pour désactiver l'énergie DC (418) fournie à la circuiterie d'émetteur-récepteur active (414).

6. Dispositif selon la revendication 1, dans lequel la circuiterie NFC (410) est agencée pour démoduler les données sur la base du courant induit et pour moduler des données d'émission dans l'une de la circuiterie d'émetteur-récepteur passive (412) et de la circuiterie d'émetteur-récepteur active (414).

7. Dispositif selon la revendication 1, dans lequel l'antenne (402) est couplée à la circuiterie de redresseur (404) pendant le redressement du courant induit et à la circuiterie NFC (410) pendant au moins l'une de la démodulation de données sur la base du courant induit et de la modulation de données d'émission reçues à partir de l'une de la circuiterie d'émetteur-récepteur passive (412) et de la circuiterie d'émetteur-récepteur active (414).

8. Procédé de réception simultanée d'énergie sans fil et de communications en champ proche (NFC), comprenant :
recevoir un courant induit à partir d'une antenne (402) d'un dispositif électronique (400) ;
redresser le courant induit pour générer de l'énergie de courant continu (DC) pour utilisation par un dispositif électronique (400) ;
et **caractérisé en ce qu'**il comprend en outre
sélectionner la circuiterie d'émetteur-récepteur active (414) au lieu de la circuiterie d'émetteur-récepteur passive (412) si de l'énergie DC (418) est détectée dans la batterie (426) ;
sélectionner la circuiterie d'émetteur-récepteur passive (412) au lieu de la circuiterie d'émetteur-récepteur active (414) si aucune énergie DC (418) n'est détectée dans la batterie (426) ; et
démoduler le courant induit pour déterminer des données pour NFC.

9. Procédé selon la revendication 8, dans lequel la démodulation comprend la démodulation de données pour utilisation par au moins l'une de la circuiterie d'émetteur-récepteur active (414) du dispositif électronique (400) et de la circuiterie d'émetteur-récepteur passive (412) du dispositif électronique (400).

10. Procédé selon la revendication 9, comprenant le fait d'alimenter avec la tension DC produite la circuiterie d'émetteur-récepteur active (414) et la circuiterie d'émetteur-récepteur passive (412).

11. Procédé selon la revendication 8, dans lequel le courant induit est généré à partir d'au moins l'une d'une onde porteuse non modulée et d'une onde porteuse de données modulée comprenant des données modulées sur elle.

12. Procédé selon la revendication 11, dans lequel lorsque le courant induit est généré à partir d'une onde porteuse de données modulée, le procédé comprend le redressement des données modulées pour obtenir de l'énergie DC.

13. Procédé selon la revendication 8, comprenant en outre :
fournir de l'énergie DC (416) à la circuiterie d'émetteur-récepteur passive (412) lorsque la circuiterie d'émetteur-récepteur passive (412) est sélectionnée ; et
fournir de l'énergie DC (418) à la circuiterie d'émetteur-récepteur active (414) lorsque la circuiterie d'émetteur-récepteur active (414) est sélectionnée.
